# EUROPÄISCHE PATENTANMELDUNG

(11) **EP 1 462 499 A1**
(43) Veröffentlichungstag der Anmeldung: **29.09.2004**
(21) Anmeldenummer: 03028602.5
(22) Anmeldetag: 12.12.2003
(51) Int. Cl.: C09J 189/06, D21H 27/34, B05C 5/04

(54) **Schmelzbarer Klebstoff auf Gelatinebasis**

(30) Priorität: 23.12.2002 DE 10261786
(71) Anmelder: Fritz Häcker GmbH & Co. KG, 71665 Vaihingen/Enz (DE)
(72) Erfinder: Fichtinger, Ramona, 71665 Vaihingen (DE)
(74) Vertreter: Patentanwälte Ruff, Wilhelm, Beier, Dauster & Partner

(57) **Zusammenfassung**

Es wird ein Klebstoff auf Gelatinebasis bereitgestellt, der neben anderen Bestandteilen ein wasserlösliches Polymer umfasst, welches dem Klebstoff fadenziehende Eigenschaften verleiht. Bei dem wasserlöslichen Polymer handelt es sich bevorzugterweise um Polyethylenglykole und/oder Polyvinylalkohole. Dieser Klebstoff ist in besonderer Weise für die Zwischenlagenverklebung mit sehr geringem Klebstoffverbrauch geeignet.

## Beschreibung

Die vorliegende Erfindung betrifft einen schmelzbaren Klebstoff auf Gelatinebasis, die Verwendung dieses Klebstoffs für die Zwischenlagenverklebung, ein Verfahren zur Zwischenlagenverklebung sowie eine entsprechende Vorrichtung.

Bei der Zwischenlagenverklebung werden mehrere Substratlagen, beispielsweise Papier, miteinander großflächig verklebt. In der Papierindustrie spielt diese Art der Verklebung vor allem bei der Herstellung von sogenannten "Tissue and Towels"-Produkten eine grosse Rolle. Zu diesem Bereich zählen beispielsweise Haushaltspapiere, Papiertaschentücher, Toilettenpapiere, Servietten und ähnliches. Hierbei werden große Mengen von Papierlagen vorzugsweise als Bahnenware miteinander verklebt, bzw. auf andere Art miteinander verbunden. Bei der Herstellung derartiger Produkte sind Schnelligkeit und Kostengünstigkeit wichtige Gesichtspunkte.

Herkömmlicherweise werden die verschiedenen Lagen oftmals durch Prägung miteinander verbunden. Dies geschieht vorzugsweise mit Hilfe von Metallwalzen. Die Lagen können hierbei großflächig geprägt werden oder nur in bestimmen Bereichen, beispielsweise durch Rändelräder fixiert werden. Problematisch hierbei ist, dass die verschiedenen Walzen oder Rändelräder sehr schnell verschleissen, da hier die Metallwalzen oder -räder aus Metall nur durch eine dünne Papierschicht von anderem Metall getrennt sind. Dies bewirkt einen sehr schnellen Verschleiss der Walzen oder Räder. Als eine Alternative zur Prägung wird eine Verklebung mit Stärkelösung durchgeführt. Die Nachteile hierbei ergeben sich zum einen aus dem notwendigerweise hohen Wassergehalt dieser Stärkelösungen. Dieser bewirkt, dass die Stärkelösung in unerwünschtem Masse durch die Papierlagen durchschlägt und so die Qualität des Produktes beeinträchtigt. Hinzu kommt, dass während der Verklebung relativ leicht Verschmutzungen auftreten, so dass diese Art der Verklebung schwierig in der Anwendung ist.

Aufgrund dieser Probleme der herkömmlichen Verbindungs- bzw. Verklebungsmethoden in der Zwischenlagenverklebung wurden Überlegungen angestellt, für diese Anwendungen Klebstoffe einzusetzen, die auf Gelatine basieren und für die Heißverklebung geeignet sind. Derartige, bei höheren Temperaturen schmelzbare Klebstoffe haben den Vorteil, dass sie beim Übergang vom flüssigen Zustand in den Gelzustand sehr hohe Klebkraft entwickeln und bei der entsprechenden Temperatur sofort fest werden, ohne in die Substratlagen, insbesondere die Papierlagen, durchzuschlagen. Ein derartiger schmelzbarer Klebstoff ist beispielsweise in der DE 42 25 465 A1 beschrieben. Herkömmliche Kleber auf Gelatinebasis werden normalerweise auf die zu verklebenden Schichten aufgestrichen oder aufgewalzt (kaschiert). Hierbei entsteht ein relativ hoher Klebstoffbedarf. Das Problem bei der Verwendung von Klebstoffen auf Gelatinebasis für die Zwischenlagenverklebung beispielsweise im "Tissue and Towels"-Bereich ist jedoch, dass für die Herstellung dieser Massenwaren nur ein Auftrag des Klebstoffs in minimaler Menge aus Kostengründen in Frage kommt. Hierfür bietet sich insbesondere die Auftragung des Klebstoffes in sehr feinen Fäden an. Eine derartige fadenförmige Auftragung von Klebstoffen auf Gelatinebasis ist jedoch bisher nicht möglich, da mit herkömmlichen Klebstoffen auf Gelatinebasis kein Faden erzeugt werden kann, der eine ausreichende Abrissfestigkeit und Elastizität entwickelt.

Die Erfindung stellt sich daher die Aufgabe, einen Klebstoff auf Gelatinebasis bereitzustellen, mit welchem eine Auftragung in feiner Fadenform möglich ist, so dass die Vorteile von Klebstoffen auf Gelatinebasis in der Zwischenlagenverklebung von Massenware genutzt werden können.

Diese Aufgabe wird gelöst durch einen Klebstoff auf Gelatinebasis, wie er im Anspruch 1 beschrieben ist. Bevorzugte Ausführungsformen dieses Klebstoffes sind in den abhängigen Ansprüchen 2-11 dargestellt. Der Anspruch 12 bezieht sich auf eine Verwendung dieses Klebstoffs und der Anspruch 13 beansprucht ein entsprechendes Produkt. In den Ansprüchen 14 bis 18 werden Verfahren zur Zwischenlagenverklebung beschrieben. Der Anspruch 19 beansprucht eine entsprechende Auftragsvorrichtung und die abhängigen Ansprüche 20 bis 24 beziehen sich auf bevorzugte Ausführungsformen dieser Auftragsvorrichtung. Der Wortlaut sämtlicher Ansprüche wird hiermit durch Bezugnahme zum Inhalt der Beschreibung gemacht.

Bei dem erfindungsgemäßen Klebstoff auf Gelatinebasis handelt es sich um einen Klebstoff, der bei Normaltemperatur im wesentlichen fest ist. Dieser Klebstoff ist dadurch gekennzeichnet, dass er neben anderen Bestandteilen ein wasserlösliches Polymer umfasst, welches dem Klebstoff fadenziehende Eigenschaften verleiht. Diese fadenziehenden Eigenschaften ermöglichen es, dass der erfindungsgemäße Klebstoff auf ein zu verklebendes Substrat, beispielsweise ein Papier, in sehr geringer Menge aufgetragen wird. Mit herkömmlichen Gelatineklebern war es nicht möglich, einen Auftrag in derartigen feinen Fäden zu bewerkstelligen, da Fäden mit herkömmlichen Gelatineklebern nicht abrissfest sind und nicht die erforderliche Elastizität aufweisen. Dank dieser neuen fadenziehenden Eigenschaft des erfindungsgemäßen Klebstoffs auf Gelatinebasis ist es nun möglich, flächige Substrate mit sehr geringen Auftragsmengen von Klebstoff zu verkleben. Es sind hierbei gegebenenfalls Mengen von weniger als 1 g/m² ausreichend, um eine ausreichend feste Verbindung der miteinander zu verklebenden Lagen zu erreichen. Beispielsweise kann eine Menge von etwa 0,5 g/m² ausreichend sein. Hierbei wird die sehr hohe Klebkraft von Gelatineklebern ausgenutzt, die sich beim Übergang vom flüssigen zum Gelzustand entwickelt.

Ein entscheidender Vorteil der nun möglichen Verwendung von Klebstoffen auf Gelatinebasis bei der Zwischenlagenverklebung ist, dass es sich hierbei um einen natürlichen Klebstoff handelt, der sich in Wasser bei Temperaturen oberhalb von etwa 30° C auflöst. Diese Lösbarkeit in Wasser hängt auch von den weiteren Bestandteilen des Klebstoffes ab. Unter Umständen kann der Klebstoff auch erst bei höheren Temperaturen lösbar sein. Eine entsprechende Lösbarkeit in Wasser ist bei synthetischen Klebstoffen, die als Hotmelt-Klebstoffe herkömmlicherweise eingesetzt werden, nicht vorhanden. Dies führt dazu, dass, wenn das Substrat, insbesondere Papier, nach Auftrag des synthetischen Klebstoffes wieder in die Maische zurückgeführt werden muss, der synthetische Klebstoff im Papier sogenannte Stickies bildet. Diese kleinen, nicht löslichen Zusammenlagerungen, die Einschlüsse in Papier oder ähnlichem bilden, sind sehr nachteilig für die Qualität des herzustellenden Papieres. Eine Rückführung des Papiers mit Klebstoff in die Maische kann beispielsweise bei Störungen des Produktionsablaufes notwendig sein. Weiterhin stellt sich dieses Problem auch im Zusammenhang mit dem Recycling von Papier. Der erfindungsgemäße Klebstoff löst sich vollständig in Wasser bei entsprechenden Temperaturen auf, so dass ein Auftreten von Stickies im allgemeinen nicht vorkommt.

Der Einsatz des erfindungsgemäßen Klebstoffes, welcher auf natürlichen Rohstoffen beruht, in dem beschriebenen Bereich der Papierindustrie hat weiterhin den Vorteil, dass ein derartiger Klebstoff lebensmitteltechnisch völlig unbedenklich ist, sofern bei den weiteren Bestandteilen des Klebstoffs die Lebensmittelzulässigkeit beachtet wird. Dies spielt beispielsweise bei der Verwendung des erfindungsgemäßen Klebstoffes für Tücher im Küchenbereich eine Rolle, da derartige Tücher im allgemeinen direkt mit Lebensmitteln in Kontakt kommen können. Dies stellt einen weiteren großen Vorteil des erfindungsgemäßen Klebstoffes gegenüber anderen Klebstoffen dar. Zusätzlich hat der erfindungsgemäße Klebstoff den Vorteil, dass durch den fadenförmigen Auftrag des Klebstoffs die Stabilität, insbesondere die Reißfestigkeit von verklebten Substratlagen, beispielsweise Papierlagen, positiv beeinflusst wird.

In einer bevorzugten Ausführungsform der Erfindung enthält der Klebstoff etwa 0,1 bis etwa 20 Gew.-%, insbesondere etwa 5 bis etwa 15 Gew.-% des wasserlöslichen Polymers. Dieses Polymer ist für die besonders vorteilhaften fadenziehenden Eigenschaften des erfindungsgemäßen Klebstoffes verantwortlich.

Weiterhin enthält der Klebstoff vorteilhafter Weise etwa 10 bis etwa 60 Gew.-%, insbesondere etwa 20 bis etwa 40 Gew.-% Gelatine, vorzugsweise etwa 25 bis etwa 40 Gew.-% Gelatine. Bei dieser Gelatine bzw. dieser Gelatinekomponente kann es sich um technische Gelatine oder auch um Lebensmittelgelatine handeln, wobei die Lebensmittelgelatine im wesentlichen dadurch gekennzeichnet ist, dass sie weitestgehend keine Konservierungsstoffe enthält. Im übrigen kann auch neben anderen Möglichkeiten beispielsweise allgemein ein Glutinleim aus tierischen Rohstoffen, wie Knochenleim oder Hautleim, als Gelatinekomponente eingesetzt werden. Weiterhin kann als Gelatinekomponente auch ein Gemisch der verschiedenen genannten oder hiermit vergleichbarer Stoffe verwendet werden.

Vorteilhafterweise enthält der erfindungsgemäße Klebstoff etwa 20 bis etwa 60 Gew.-%, insbesondere etwa 30 bis etwa 40 Gew.-% Wasser. Unter anderem der Gehalt an Wasser im erfindungsgemäßen Klebstoff ist dafür verantwortlich, bei welcher Temperatur der Klebstoff von der flüssigen Phase in die Gelphase übergeht. Mit einem höheren Wassergehalt kann diese Übergangstemperatur herabgesetzt werden, was bei bestimmten Anwendungen vorteilhaft sein kann.

In einer weiteren bevorzugten Ausführungsform enthält der erfindungsgemäße Klebstoff einen Weichmacher, beispielsweise Glycerin und/oder Diethylenglykol. Dieser Weichmacher kann etwa 0 bis etwa 40 Gew.-%, insbesondere etwa 5 bis etwa 20 Gew.-% des erfindungsgemäßen Klebstoffes ausmachen. Selbstverständlich können auch andere Weichmacher geeignet sein, wie sich dem Fachmann ohne weiteres erschließt. Insbesondere bei relativ geringem Wassergehalt im erfindungsgemäßen Klebstoff kann der Anteil des Weichmachers höher sein, während bei einem erfindungsgemäßen Klebstoff mit relativ hohem Wassergehalt die zugegebene Menge an Weichmacher geringer ausfallen kann.

In einer besonders bevorzugten Ausführungsform des erfindungsgemäßen Klebstoffes handelt es sich bei dem wasserlöslichen Polymer um Polyethylenglykol und/oder Polyvinylalkohol. Ganz besonders bevorzugt ist hierbei Polyethylenglykol (PEG). Das PEG hat hierbei vorteilhafterweise eine Molmasse von mindestens 1.000 g/mol, insbesondere mindestens 8.000 g/mol, vorzugsweise mindestens 25.000 g/mol. Hierbei erhöhen sich die fadenziehenden Eigenschaften des erfindungsgemäßen Klebstoffes mit der Molmasse, so dass insbesondere Polyethylenglykol mit hohen Molmassen vorteilhaft sein kann. Entsprechendes gilt für Polyvinylalkohole, die ebenfalls als wasserlösliche Polymere im Sinne der Erfindung eingesetzt werden können. Die Molmasse des eingesetzten Polyvinylalkohols beträgt dabei in einer bevorzugten Ausführungsform mindestens 1.000 g/mol, vorzugsweise mindestens 5.000 g/mol. Besonders bevorzugt ist mindestens 6.000 g/mol. Auch hier können Polyvinylalkohole mit einer höheren Molmasse bevorzugt sein, da hierdurch die fadenziehenden Eigenschaften des erfindungsgemäßen Klebstoffs im allgemeinen noch gesteigert sind.

In einer weiteren bevorzugten Ausführungsform handelt es sich bei dem wasserlöslichen Polymer um ein Gemisch verschiedener Polyethylenglykole oder verschiedener Polyvinylalkohole unterschiedlicher Molmassen. Weiterhin kann es sich auch um ein Gemisch eines oder mehrere Polyethylenglykole mit einem oder mehreren Polyvinylalkoholen handeln.

In einer besonders bevorzugten Ausführungsform des erfindungsgemäßen Klebstoffes enthält der Klebstoff etwa 0,1 bis etwa 20 Gew.-%, insbesondere etwa 5 bis etwa 15 Gew.-% des wasserlöslichen Polymers, etwa 10 bis etwa 60 Gew.-%, insbesondere etwa 20, besonders bevorzugt etwa 25, bis etwa 40 % Gew.-% Gelatine, etwa 20 bis etwa 60 Gew.-%, insbesondere etwa 30 bis etwa 40 Gew.-% Wasser, sowie etwa 0 bis etwa 40 Gew.-%, insbesondere etwa 5 bis etwa 20 Gew.-% Weichmacher, vorzugsweise Glyzerin und/oder Diethylenglykol.

Bevorzugterweise kann der Klebstoff auch noch weitere Bestandteile enthalten, die auf die jeweilige Verwendung des Klebstoffs abgestimmt sein können. Beispielsweise kann es sich bei diesen weiteren Bestandteilen um etwa 0 bis etwa 50 Gew.-%, insbesondere etwa 5 bis etwa 20 Gew.-% Zucker und/oder Zuckersirup handeln. Als geeignete Zucker kommen hierbei u.a. Saccharose und/oder Glukose in Frage. Die Verwendung von Zuckersirup kann besonders vorteilhaft sein, da hierdurch die fadenziehenden Eigenschaften des erfindungsgemäßen Klebstoffs noch gesteigert werden können. Für die Bereitstellung der Zusammensetzung des Klebstoffs kann beispielsweise ein 80 %iger Sirup gewichtsmäßig berücksichtigt werden, da der Sirup nicht als Feststoff vorliegt.

Weiterhin kann der erfindungsgemäße Klebstoff etwa 0 bis etwa 20 Gew.-%, insbesondere etwa 5 bis etwa 15 Gew.-% Salze enthalten. Ganz besonders bevorzugt sind hierbei Sulfate. Beispielsweise kann Magnesiumsulfat und/oder Natriumsulfat verwendet werden. Durch den Zusatz von Sulfaten, z. B. Magnesiumsulfat (Bittersalz), kann der Erstarrungspunkt des erfindungsgemäßen Klebstoffes erhöht werden. In diesen Fällen kann der Gelatinegehalt niedriger eingestellt werden. Dies ist insbesondere aus Kostengründen interessant, da Bittersalz kostengünstiger als Gelatine ist. Chloride eignen sich als Salze für die erfindungsgemäßen Klebstoffe im allgemeinen nicht, da sie den Erstarrungspunkt herabsetzen.

Weiterhin kann mit Vorteil etwa 0 bis etwa 1 Gew.-%, insbesondere etwa 0,01 bis etwa 0,5 Gew.-% Desinfektions- und/oder Bleichmittel eingesetzt werden. Hierbei kann beispielsweise Wasserstoffperoxid verwendet werden. Weiterhin kann der erfindungsgemäße Klebstoff einen Weißmacher, wie beispielsweise Titandioxid enthalten. Dieser wird bevorzugterweise mit etwa 0 bis etwa 5 Gew.-%, insbesondere mit etwa 0,1 bis etwa 3 Gew.-% eingesetzt. Ausserdem kann der Klebstoff ein Konservierungsmittel enthalten, beispielsweise etwa 0 bis etwa 1 Gew.-%, insbesondere etwa 0,1 bis etwa 0,6 Gew.-%. Darüber hinaus kann es vorteilhaft sein, wenn der Klebstoff etwa 0 bis etwa 1 Gew.-%, insbesondere etwa 0,1 bis etwa 0,7 Gew.-% Entschäumer enthält. Darüber hinaus kann etwa 0 bis etwa 1 Gew.-%, insbesondere etwa 0,01 bis etwa 0,5 Gew.-% Parfümierungsmittel enthalten sein. Gegebenenfalls kann der erfindungsgemäße Klebstoff auch noch weitere Zusatzstoffe wie beispielsweise Farbmittel enthalten.

In einer weiteren bevorzugten Ausführungsform ist der Klebstoff dadurch gekennzeichnet, dass der Erstarrungspunkt unterhalb von 70 °C, insbesondere unterhalb von 50 °C und besonders bevorzugt unterhalb von 45 °C liegt. Besonders bevorzugt kann es sein, wenn der Erstarrungspunkt unterhalb von 35°C liegt. Dieser Erstarrungspunkt beschreibt die Temperatur, bei welcher der Klebstoff von der flüssigen in die Gelphase übergeht. Diese Erstarrungstemperatur kann beispielsweise durch den Gehalt an Gelatine, den Wassergehalt oder auch den Gehalt an Salz, insbesondere Bittersalz, beeinflusst werden. Es ist vom jeweiligen Anwendungsfall abhängig, in welchem Temperaturbereich der Erstarrungspunkt bevorzugterweise liegt. Wenn der Erstarrungspunkt relativ niedrig liegt, kann bei niedrigeren Temperaturen während des Verklebungsprozesses gearbeitet werden, als wenn der Erstarrungspunkt bei einer höheren Temperatur liegt.

Darüberhinaus ist der erfindungsgemäße Klebstoff bevorzugterweise dadurch gekennzeichnet, dass er in einem Temperaturbereich zwischen etwa 30 bis etwa 80 °C, insbesondere zwischen etwa 50 bis etwa 70 °C, schmelzbar ist.

In welcher Form der erfindungsgemäße Klebstoff portioniert und abgefüllt ist, hängt selbstverständlich von der jeweiligen Anwendung ab. Beispielsweise können entsprechende Mengen in Folienverpackungen eingeschweisst sein, oder der Klebstoff kann auch in Behältnisse, wie beispielsweise Kunststofffässer oder ähnliches abgefüllt sein.

Weiterhin umfasst die Erfindung die Verwendung eines Klebstoffs gemäß dieser Beschreibung für die Zwischenlagenverklebung von Lagen mit vliesartiger Struktur oder allgemein einer Nonwoven-Struktur. In besonders bevorzugter Weise handelt es sich hierbei um Papiere, wie beispielsweise Haushaltspapiere, Toilettenpapiere, Servietten oder Papiertaschentücher. Bei der Zwischenlagenverklebung kann es sich um die Verklebung von zwei, drei, vier oder mehr Lagen handeln. Besonders bevorzugt ist es, dass die Zwischenlagenverklebung für Bahnenware eingesetzt wird, wie es im Bereich von "Tissue and Towels"-Produkten üblich ist.

Darüber hinaus umfasst die Erfindung ein Produkt aus mindestens zwei Lagen mit vliesartiger Struktur, insbesondere Papierlagen, welches sich dadurch auszeichnet, dass die Lagen mit einem Klebstoff auf Gelatinebasis in Fadenform miteinander verklebt sind. Bei dem hier eingesetzten Klebstoff handelt es sich vorzugsweise um einen Klebstoff wie oben beschrieben. Die einzelnen Fäden des Klebstoffs sind vorzugsweise sehr fein und im wesentlichen parallel ausgerichtet. Die Abstände zwischen den einzelnen Fäden können im Bereich zwischen etwa 0,1 bis etwa 10 cm, insbesondere zwischen etwa 0,1 bis etwa 2 cm, vorzugsweise zwischen etwa 0,2 bis etwa 1 cm liegen. Es wird jedoch auch von der Erfindung umfasst, dass die einzelnen Fäden enger oder weiter auseinanderliegen. Es kann auch bevorzugt sein, dass die Fäden nicht parallel, sondern im wesentlichen ungeordnet vorliegen. Die einzelnen Fäden haben einen im wesentlichen runden Durchschnitt. Vorzugsweise liegt die Größenordnung des Durchschnittes der Fäden zwischen etwa 1 und etwa 1000 µm, insbesondere etwa 10 bis 100 µm.

In einer bevorzugten Ausführungsform des erfindungsgemäßen Produktes liegt die Menge des Klebstoffs bei 1 g/m² oder weniger. Besonders bevorzugt ist eine Klebstoffmenge von 0,5 g/m² oder weniger.

Die Erfindung umfasst weiterhin ein Verfahren zur Zwischenlagenverklebung, wobei der erfindungsgemäße Klebstoff in Fadenform auf mindestens eine der zu verklebenden Lagen in im wesentlichen flüssiger Phase aufgetragen wird und die Lagen vor vollständigem Verlust der Klebkraft zusammengeführt werden. Der Verlust der Klebkraft tritt in der Regel nach dem vollständigen Übergang des Klebstoffs von der flüssigen Phase in die Gelphase ein. Da der Übergang von der flüssigen Phase in die Gelphase von der Temperatur abhängig ist, wird der Klebstoff bevorzugterweise bei einer Temperatur oberhalb des Erstarrungspunktes des Klebstoffes aufgetragen, so dass beim Erkalten des Klebstoffes dieser von der flüssigen in den Gelzustand übergeht und hierbei seine hohe Klebkraft entwickelt. Gegebenenfalls kann der Erstarrungspunkt des Klebstoffes beispielsweise durch Zusatz von Wasser etwas herabgesetzt werden, wenn der Klebstoff zu schnell geliert.

In einer besonders bevorzugten Ausführungsform des erfindungsgemäßen Verfahrens wird der Klebstoff zur Ausbildung der Fäden durch kleine Öffnungen, beispielsweise Löcher oder Düsen, bei einer Temperatur oberhalb des Erstarrungspunktes des Klebstoffes herausgepresst. Dies kann mit oder ohne wesentlichen Druck durchgeführt werden. Hierdurch wird der flüssige Klebstoff in eine Fadenform überführt. Dieser Faden legt sich z.B. durch die Schwerkraft bedingt auf die untere der zu verklebenden Lagen, die sich vorteilhafterweise kontinuierlich weiterbewegt. Hierbei wird der entstandene Faden in die Länge gezogen und legt sich der Länge nach auf die Lage. Die weitere zu verklebende Lage wird von oben mit der unteren Lage zusammengeführt, so dass der Klebstoff in einer Art Spalt hineingegeben wird. Im weiteren Verlauf des Verfahrens legt sich die obere Lage auf die untere Lage und wird durch die sich schnell entwickelnde hohe Klebkraft des erfindungsgemäßen Klebers während des Übergangs vom flüssigen in den Gelzustand mit der unteren Lage verklebt. Die Geschwindigkeit der sich bewegenden Lagen kann zwischen etwa 10 bis etwa 500 m/min liegen. Vorteilhafterweise liegt sie zwischen etwa 80 bis etwa 400 m/min. Derartige Fördergeschwindigkeiten werden in der industriellen Fertigung im allgemeinen eingesetzt und sind gemäß dem erfindungsgemäßen Verfahren ohne weiteres zu erreichen. Je nach den Verfahrensbedingungen kann sie auch darunter oder darüber liegen.

Durch die Reißfestigkeit der entstehenden Fäden und die Elastizität dieser Fäden ist es möglich, den Klebstoff sehr dünn aufzutragen. Weiterhin können die zu verklebenden Lagen mit hohen Geschwindigkeiten bewegt werden. Um zu gewährleisten, dass die Fäden nicht abreißen, müssen bei hohen Geschwindigkeiten unter Umständen die Austrittsöffnungen vergrößert werden, so dass der Klebstofffaden anfangs einen etwas höheren Durchmesser aufweist und dann im weiteren Verlauf des Prozesses entsprechende Reserven zum Langziehen hat.

In einer bevorzugten Ausführungsform beträgt die Temperatur des Klebstoffs beim Auftrag etwa 45 bis etwa 80 °C, insbesondere etwa 50 bis etwa 70 °C. Ganz besonders bevorzugt ist eine Temperatur zwischen etwa 50 und etwa 60 °C, insbesondere zwischen etwa 55 und etwa 60°C.

In einer weiteren bevorzugten Ausführungsform des erfindungsgemäßen Verfahrens befindet sich zwischen den Öffnungen, aus welchen der Klebstoff austritt, und der Lage des Substrates, auf welches der Klebstoff aufgetragen wird, ein Abstand von etwa 0,5 bis etwa 20 cm, insbesondere etwa 1 bis etwa 10 cm. Zwischen dem Austritt aus den Öffnungen und dem Auftreffen auf der Lage bzw. dem Zusammenführen der beiden zu verklebenden Lagen sollte vorteilhafterweise der Klebstoff nicht derart abkühlen, dass er bereits in die Gelphase übergegangen ist, wenn die beiden Lagen aufeinander treffen und damit seine optimale Klebkraft eingebüsst hat. Daher sollte dieser Abstand auf die Temperatur des aufzutragenden Klebstoffs und die Geschwindigkeit der sich bewegenden Lagen abgestimmt sein, um zu gewährleisten, dass der Klebstoff beim Zusammentreffen der beiden Lagen noch nicht vollständig geliert ist.

In einer weiteren bevorzugten Ausführungsform des erfindungsgemäßen Verfahrens haben die Fäden des in Fadenform aufgetragenen Klebstoffes zueinander einen Abstand von etwa 0,1 bis etwa 10 cm, insbesondere bis etwa 2 cm, und vorzugsweise etwa 0,2 bis etwa 1 cm. Durch einen relativ engen Abstand der einzelnen Fäden wird die Klebkraft zwischen den zu verklebenden Lagen erhöht, andererseits wird jedoch auch der Verbrauch an Klebstoff erhöht, was in Bezug auf die Kosten ungünstig ist. Bei einem Abstand der Fäden von 2 cm oder mehr ist in der Regel noch eine ausreichende Klebekraft vorhanden. Allerdings können hier bei der weiteren Verarbeitung von beispielsweise Bahnenware Schwierigkeiten auftreten. Nach dem Verkleben wird die aufgerollte Bahnenware gewöhnlicherweise zersägt, beispielsweise für die Toilettenpapierherstellung oder die Küchenpapierherstellung. Hierbei muss gewährleistet sein, dass die Verklebung auch in den Randbereichen ausreichend ist, so dass für diese Anwendungen Abstände der Fäden voneinander im Bereich von etwa 1 cm oder vorzugsweise weniger, beispielsweise etwa 0,5 cm vorteilhaft sind. Für bestimmte Anwendungen kann es auch vorteilhaft sein, wenn die Fäden unstrukturiert auf die eine der zu verklebenden Lagen aufgetragen werden.

In Bezug auf das Sägen der Bahnenware zeigt sich ein weiterer Vorteil des erfindungsgemäßen Verfahrens. Da der Klebstoff auf Gelatinebasis sofort seine Klebkraft aufbaut und keine weitere Trocknung benötigt, kann die Bahnenware nach der Zwischenlagenverklebung in der dann vorliegenden Rollenform sofort dem Sägeprozeß unterworfen werden. Bei Bahnenware, die nach herkömmlicher Weise beispielsweise mit einer Stärkelösung verklebt ist, muss vor dem eigentlichen Sägevorgang ein Trocknungsschritt eingefügt werden, da die Kleber auf Stärkebasis eine längere Zeit brauchen, um ihre Klebekraft aufzubauen. Auch der Einsatz von synthetischen Hotmelts in der Zwischenlagenverklebung bereitet beim Sägen Probleme, da der Hotmelt-Klebstoff bei den hohen Temperaturen, die beim Sägen entstehen, schmilzt und verschmiert und die Qualität des Produktes verschlechtert.

Mit Vorteil wird nach dem Zusammenführen der Lagen mit den dazwischen laufenden Fäden des Klebstoffs ein zusätzlicher Schritt durchgeführt, bei welchem diese Lagen weiter fixiert werden. Dieser Verfahrensschritt wird vorteilhafter Weise so durchgeführt, dass die zusammengeführten Lagen durch ein oder mehrere Walzenpaare mit entsprechend geringem Abstand zueinander hindurchgeführt und gepresst werden. Weiterhin können die Lagen zusätzlich oder als Alternative hinzu vollflächig oder teilweise, beispielsweise in den Randbereichen, geprägt werden.

Mit dem erfindungsgemäßen Verfahren können zwei- oder mehrlagige Produkte hergestellt werden. Bei einem mehr als zweilagigen Produkt können jeweils zwei Lagen in mehreren Durchläufen miteinander verklebt werden, wobei eine der Lagen dann gegebenenfalls aus zwei oder mehr bereits miteinander verklebten Lagen besteht. Besonders bevorzugt ist es jedoch, die mehrlagige Verklebung in einem Durchgang durchzuführen, wobei parallele Auftragsvorrichtungen für den Klebstoff eingesetzt werden.

Darüberhinaus umfasst die Erfindung eine Auftragsvorrichtung zur Zwischenlagenverklebung mit einem fadenziehenden Klebstoff, wobei insbesondere ein Klebstoff gemäß der obigen Beschreibung eingesetzt wird. Diese Auftragsvorrichtung umfasst mindestens eine Klebstoffschmelzeinrichtung, mindestens eine Klebstoffzuführeinrichtung und mindestens einen Auftragskopf mit mindestens zwei Austrittsöffnungen. Bei den Austrittsöffnungen handelt es sich vorzugsweise um feine Löcher und/oder Düsen. Diese Auftragsvorrichtung ist in besonderer Weise für die Durchführung des oben beschriebenen Verfahrens geeignet. In der mindestens einen Klebstoffschmelzeinrichtung wird der Klebstoff auf Gelatinebasis geschmolzen, insbesondere bei Temperaturen zwischen etwa 50 bis etwa 80 °C. Höhere Temperaturen können im Einzelfall erforderlich sein, können aber unter Umständen zu einer Verschlechterung der Qualität des Klebstoffs führen. Besonders bevorzugt ist eine Temperatur zwischen etwa 50 und etwa 70 °C. Nach dem zumindest teilweisen Abschmelzen des Klebstoffs, beispielsweise durch eine Heizplatte, wird der flüssige Klebstoff über eine Klebstoffzuführeinrichtung, beispielsweise mit Hilfe einer Pumpe, einem Auftragskopf zugeführt. Diese Klebstoffzuführeinrichtung ist vorteilhafterweise temperiert, insbesondere beheizt, da hierdurch ein vorzeitiges Gelieren verhindert wird, welches zum einen die Zuführeinrichtung verstopfen würde und zum anderen einen effizienten Klebevorgang verhindern würde. Bei einer Temperatur des Klebstoffs oberhalb des Erstarrungspunktes tritt der Klebstoff aus den Austrittsöffnungen des mindestens einen Auftragskopfes aus, wobei sich ein Faden bildet, der mit der einen Lage des zu verklebenden Substrates in Kontakt tritt.

In einer bevorzugten Ausführungsform der erfindungsgemäßen Auftragsvorrichtung weisen die Austrittsöffnungen in dem mindestens einen Auftragskopf einen Durchmesser zwischen etwa 0,05 und 1 mm, insbesondere zwischen etwa 0,1 und etwa 0,5 mm auf. Eine besonders geeignete Düsenöffnung oder ein geeignetes Loch kann beispielsweise einen Durchmesser von 0,3 mm aufweisen. Unter anderem durch die Größe dieser Austrittsöffnungen wird die Dicke der Klebstofffäden bestimmt. Eine größere Dicke der Fäden erhöht zwar die Klebkraft, führt aber auch zu einem höheren Klebstoffverbrauch, was aus Kostengründen unter Umständen nicht gewünscht ist. Bei einem zu geringen Durchmesser der Austrittsöffnungen könnten die Fäden zu dünn werden und somit nicht mehr eine ausreichende Abrißfestigkeit und Elastizität gewährleisten. Neben dem Durchmesser der Austrittsöffnungen spielen auch die Eigenschaften des eingesetzten Klebstoffs sowie die Geschwindigkeit der zu verklebenden Lagen, die kontinuierlich von der Auftragsvorrichtung mit entsprechenden Fördermitteln wegbewegt werden, für die Stabilität der Fäden eine Rolle. Das gelegentliche Abreissen einzelner Fäden ist jedoch für die Qualität des Produktes nicht weiter problematisch.

In einer weiteren bevorzugten Ausführungsform der erfindungsgemäßen Auftragsvorrichtung sind die Austrittsöffnungen zueinander in einem Abstand von etwa 0,1 bis etwa 10 cm, vorzugsweise bis etwa 2 cm, insbesondere von etwa 0,2 bis etwa 1 cm angeordnet. Bei einem geringen Abstand der Austrittsöffnungen zueinander wird die Frequenz der Fäden über die Breite der zu verklebenden Lage erhöht und somit auch die Klebkraft verstärkt. Allerdings führt dies zu einem erhöhten Klebstoffverbrauch, was im allgemeinen unerwünscht ist. Bei einem zu weiten Abstand der Fäden bei weit auseinanderliegenden Austrittsöffnungen treten die oben bereits beschriebenen Probleme im weiteren Produktionsprozeß, insbesondere beim Sägen der verklebten, aufgerollten Lagen ein.

In einer weiteren bevorzugten Ausführungsform der Auftragsvorrichtung ist die Auftragsvorrichtung für die Verklebung von Bahnenware vorgesehen, wobei der Auftragskopf über der im wesentlichen ganzen Bahnbreite angeordnet ist. Die Herstellung von den anfangs erwähnten Produkten der Papierindustrie, für welche der erfindungsgemäße Klebstoff in besonders vorteilhafter Weise eingesetzt werden kann, erfolgt für gewöhnlich durch die Verarbeitung von Bahnenware. Derartige Bahnen weisen eine Bahnbreite von beispielsweise 2,70 m auf. Selbstverständlich kann die erfindungsgemäße Auftragsvorrichtung für jegliche Bahnbreite eingesetzt werden. Hierbei kann der Auftragskopf beispielsweise in Form eines Rohres in angepasster Länge mit entsprechenden Öffnungen bereitgestellt werden.

Die erfindungsgemäße Auftragsvorrichtung kann für die Herstellung eines zweilagigen Produktes aber auch für die Herstellung von mehrlagigen Produkten, beispielsweise drei- oder vierlagigen Produkten, vorgesehen sein. Für die Herstellung von mehrlagigen Produkten weist die Auftragsvorrichtung vorzugsweise zwei oder mehr Auftragsköpfe auf, die im wesentlichen parallel angeordnet sind. Hierbei werden die verschiedenen Substratlagen jeweils zwischen den jeweils parallel angeordneten Auftragsköpfen eingeführt, so dass die mehrschichtige Zwischenlagenverklebung in einem Durchgang ausgeführt werden kann. Näheres hierzu ergibt sich aus der Figurenbeschreibung.

In einer bevorzugten Ausführungsform ist die Klebstoffschmelzeinrichtung für ein Aufschmelzen bei Temperaturen zwischen etwa 30, insbesondere etwa 50 und etwa 80 °C vorgesehen. Das Aufschmelzen des Klebstoffs in einem entsprechenden Behältnis kann von oben, unten und/oder von seitwärts erfolgen. Hierfür können beispielsweise eine oder mehrere Heizplatten und/oder beheizbare Stempel vorgesehen sein.

In einer besonders bevorzugten Ausführungsform der erfindungsgemäßem Auftragsvorrichtung ist die Klebstoffschmelzeinrichtung eine Zwillingsfassschmelzanlage. Hierbei wird der Klebstoff in zwei oder mehr Fässern, beispielsweise 200 I-Fässern, bereitgestellt. In einem der Fässer wird mit Hilfe eines Stempels der Klebstoff oben oder unten abgeschmolzen und über eine Leitung dem Auftragskopf zugeführt. Sobald das eine der Fässer zur Neige geht, kann in einfacher Weise auf das andere Faß umgestellt werden, so dass der Produktionsprozeß nicht unterbrochen werden muss. Derartige Zwillingsfassschmelzanlagen sind bereits bei beispielsweise Hotmelt-Klebevorgängen üblich.

Von der Erfindung wird schließlich umfasst, dass die beschriebene Auftragsvorrichtung in eine Vorrichtung zur Zwischenlagenverklebung integriert ist. Die Erfindung umfasst somit eine Anlage, die neben der Auftragsvorrichtung weitere Elemente enthält. Bei diesen Elementen kann es sie beispielsweise um Einrichtungen zur Förderung der zu verklebenden Lagen und/oder zur Fixierung durch beispielsweise Walzen oder Rändelräder handeln. Weiterhin können z. B. Elemente zur Aufrollung der verklebten Lagen vorhanden sein.

Weitere Einzelheiten der Erfindung ergeben sich aus den Figuren und der Beschreibung der Beispiele in Verbindung mit den Unteransprüchen. Hierbei können die einzelnen Merkmale jeweils für sich oder in Kombination miteinander verwirklicht sein.

In den Figuren zeigt
- Fig. 1:: Schematische Darstellung einer erfindungsgemäßen Auftragsvorrichtung in Frontansicht.
- Fig. 2:: Schematische Darstellung der Herstellung eines zweilagigen Verklebungsproduktes im Querschnitt.
- Fig. 3:: Schematische Darstellung der Herstellung eines dreilagigen Verklebungsproduktes im Querschnitt.

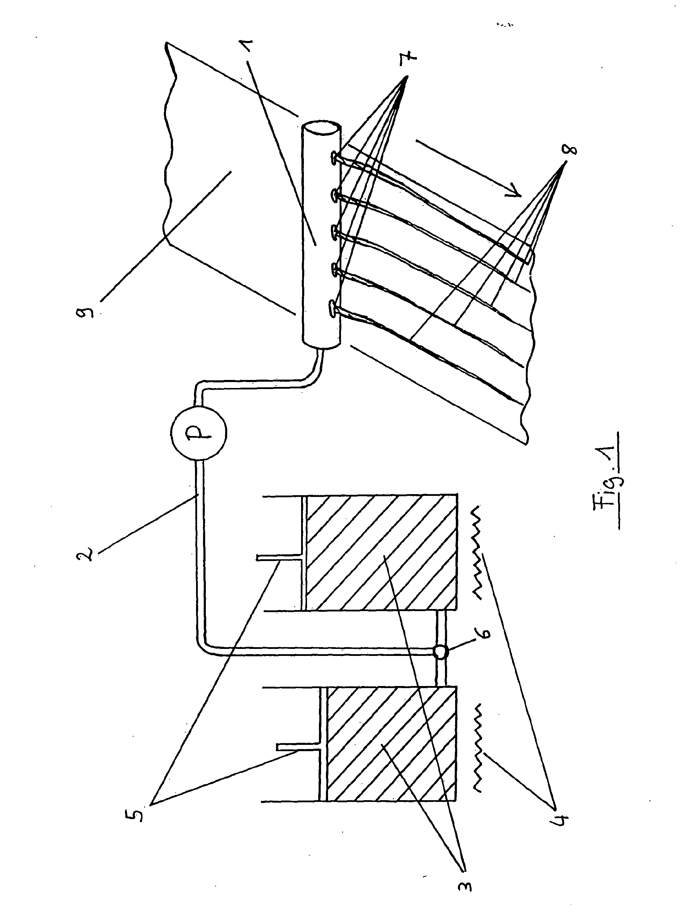

Figur 1 zeigt eine bevorzugte Ausführungsform einer erfindungsgemäßen Auftragsvorrichtung in nicht maßstabsgetreuer Darstellung, wobei der Auftragskopf 1 rohrförmig ausgebildet ist. Die Klebstoffzuführeinrichtung 2 verbindet den Auftragskopf 1 mit einer Klebstoffschmelzeinrichtung, die aus zwei Behältnissen 3 mit darin befindlichem Klebstoff besteht. Der Klebstoff in einem der Behältnisse 3 wird durch die darunter angeordnete Heizplatte 4 aufgeschmolzen. Der Klebstoff wird mit Hilfe des Stempels 5 nach unten gedrückt und tritt in die Zuführeinrichtung 2 ein. Der Fluß des Klebstoffs wird mit einer Pumpe gefördert. Wenn der Klebstoff in einem der Behältnisse 3 zu Ende geht, kann mit Hilfe des Umschaltventils 6 auf das andere Behältnis umgeschaltet werden. Der Auftragskopf 1 weist mehrere Austrittsöffnungen 7 auf, die als kleine Löcher ausgebildet sind. Durch diese Austrittsöffnungen 7 tritt der Klebstoff in Fadenform aus. Diese Fäden 8 legen sich auf die Substratlage 9, die sich in Pfeilrichtung bewegt. Die Bewegung wird durch nicht dargestellte Fördereinrichtungen bewirkt. Oberhalb des Auftragskopfes 1 wird eine weitere Substratlage zugeführt (nicht dargestellt), die sich kurz nachdem der Klebstoffaden 8 mit der unteren Lage 9 in Kontakt getreten ist, auf die untere Lage 9 auflegt, so dass durch die Klebkraft des Fadens eine feste Verbindung der beiden Lagen bewirkt wird.

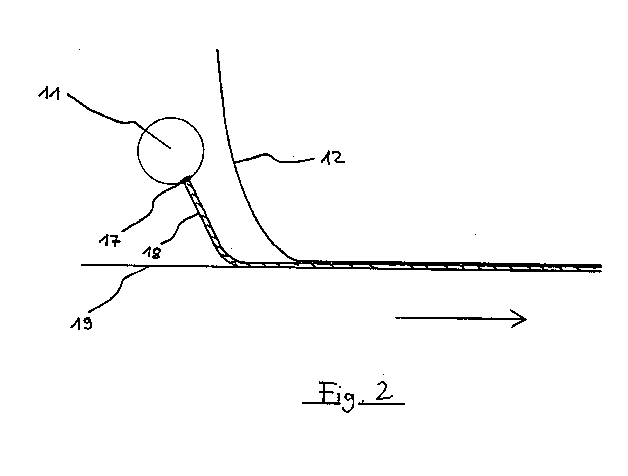

Aus Figur 2 geht eine bevorzugte Ausführungsform des erfindungsgemäßen Verfahrens bzw. einer entsprechenden Vorrichtung hervor. Hierbei tritt der fadenförmige Klebstoff 18 aus einer Öffnung 17 des Auftragskopfes 11 heraus. Dieser Klebstoff trifft auf eine der zu verklebenden Lagen 19 auf. Diese Lage bewegt sich in Pfeilrichtung, wodurch der fadenförmige Klebstoff 18 sich als langgestreckter Faden auf der Lage 19 ausrichtet. Die weitere zu verklebende Lage 12 wird auf die mit dem Klebstoff versehene Lage 19 aufgelegt, so dass durch die sich entwickelnde Klebkraft des Klebstoffes 18 die Lagen 19 und 12 miteinander verklebt werden. Um die Verklebung weiter zu fixieren, kann es vorgesehen sein, dass die verklebten Lagen beispielsweise mit Hilfe von einem oder mehreren Walzenpaaren weiter fixiert werden. Als Alternative hierzu oder auch zusätzlich kann eine Prägung der gesamten Fläche der verklebten Lagen oder einer Teilfläche hiervon, beispielsweise in den Randbereichen, durchgeführt werden.

Der Abstand zwischen der Austrittsöffnung 17 und der Lage 19 kann bis zu 20 cm betragen. Vorzugsweise bewegt sich dieser Abstand zwischen etwa 1 bis etwa 10 cm. Besonders bevorzugt ist ein Abstand von etwa 3 cm. Hierbei ist im allgemeinen zu beachten, dass der Klebstoff 18 zwischen dem Austritt aus der Öffnung 17 und dem Auftreffen auf der Lage 19 bzw. bis zum Kontakt mit der oberen Lage 12 sich abkühlt und sich damit dem Erstarrungspunkt nähert. Der erwähnte Abstand wird daher vorteilhafter Weise so gewählt, dass der Erstarrungspunkt nicht vor dem Zusammentreffen mit der Lage 12 erreicht wird, so dass der Klebstoff 18 erst zum Zeitpunkt des Zusammentreffens mit der Lage 12 oder später seinen Erstarrungspunkt erreicht und somit seine optimale Klebkraft entfalten kann.

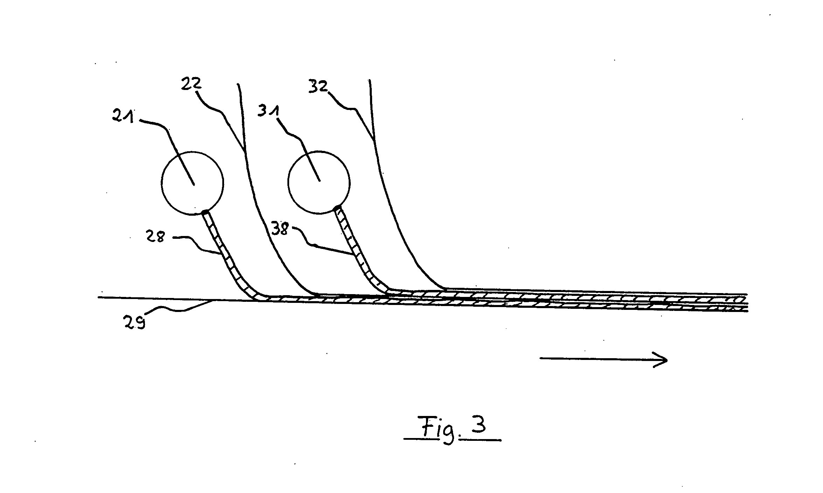

Aus Figur 3 ergibt sich eine bevorzugte Ausführungsform des erfindungsgemäßen Verfahrens bzw. einer entsprechenden Vorrichtung zur Verklebung von mehr als zwei Lagen. In diesem Beispiel sind es drei Lagen. Hierbei sind die Auftragsköpfe 21 und 31 parallel angeordnet. Der aus dem Auftragskopf 21 austretende Klebstofffaden 28 trifft auf die zuunterst liegende zu verklebende Lage 29 auf. Durch die Bewegung der Lage 29 in Pfeilrichtung richtet sich der Klebstoff in Bewegungsrichtung aus. Die nächste zu verklebende Lage 22 wird von oben zugeführt, so dass sich die Lage 22 auf die untere Lage 29, welche mit dem Klebstoff versehen ist, auflegt. Diese verklebten Lagen 22 und 29 bilden nun die Schicht, auf welche der Klebstofffaden 38, der aus der Auftragsvorrichtung 31 austritt, sich auflegt. Die nächste zu verklebende Lage 32 wird von oben zugeführt und legt sich auf die mit Klebstoff versehenen unteren Lagen 22 und 29, so dass ein dreischichtiges Produkt entsteht. Durch diese Ausführungsform des erfindungsgemäßen Verfahrens, bzw. einer entsprechenden Vorrichtung ist es möglich, die Verklebung von mehreren Lagen in einem einzigen Durchgang durchzuführen. Auch hier kann anschließend eine weitere Fixierung der Lagen durch Pressen und/oder Prägen durchgeführt werden.

Die hier dargestellte Auftragsvorrichtung kann Bestandteil einer kompletten Zwischenlagenverklebungsanlage sein, welche unter anderem die Zuführung der verschiedenen Substratlagen sowie deren weitere Verarbeitung umfasst.

### Beispiel

Im Folgenden wird eine beispielhafte Rezeptur für einen erfindungsgemäßen Klebstoff aufgeführt.

| | |
|---|---|
| 36,1 % | Wasser |
| 0,1 % | Wasserstoffperoxid 35 %-ig |
| 1,0 % | Titandioxid |
| 23,8 % | technische Gelatine 150/380 |
| 0,4 % | Konservierer |
| 0,5 % | Entschäumer |
| 11,4 % | Bittersalz |
| 9,5 % | Zucker |
| 7,6 % | Glyzerin 86,5 %-ig |
| < 0,1 % | Parfüm |
| 9,5 % PEG | Molmasse: 35.000 g/mol |

Diese verschiedenen Bestandteile werden nach Methoden, die dem Fachmann geläufig sind, zu einem Klebstoff verarbeitet. Dieser Klebstoff ist bei Raumtemperatur gallertartig und im wesentlichen fest. Oberhalb der Temperatur des Erstarrungspunktes ist der Klebstoff flüssig. Dieser Erstarrungspunkt liegt im Bereich zwischen etwa 28 und 45 °C. Die Viskosität im geschmolzenen Zustand (etwa 60 °C) liegt im Bereich zwischen etwa 2.500 und 5.000 mPa·s. Die Viskosität anderer erfindungsgemäßer Klebstoffe kann bei 60 °C zwischen etwa 200 bis etwa 10.000 mPa·s liegen.

Die Prozentangaben der Rezeptur beziehen sich im allgemeinen auf Gewichtsprozent. Als Wasser kann beispielsweise deionisiertes Wasser oder aber auch Leitungswasser eingesetzt werden. Bei dem Gelatinebestandteil handelt es sich in diesem Beispiel um eine technische Gelatine. Es sind jedoch auch andere Gelatinen oder Leime möglich. Die in diesem Beispiel eingesetzte technische Gelatine 150/380 entwickelt als 12,5 %-ige Lösung bei 60 °C 15,0 mPa·s. Die Angabe 380 bezieht sich auf Bloomgramm und bezeichnet die Gallertfestigkeit der Gelatine. Neben Bittersalz (Magnesiumsulfat) kann auch Natriumsulfat eingesetzt werden. Die Gewichtsprozentangabe bezieht sich bei Magnesiumsulfat auf das Salz mit Kristallwasser, beim Natriumsulfat wird das wasserfreie Salz zugrunde gelegt. Als Zucker wird Saccharose oder Glucose verwendet. Eine andere Möglichkeit ist der Einsatz von Zuckersirup, wobei hier ein 80 %-iger Sirup für die prozentuale Angabe zu berücksichtigen ist. Diese Rezeptur stellt nur ein Beispiel von vielen dar, wie sich dem Fachmann ohne weiteres erschließt.

Bei diesem Klebstoff handelt es sich um einen gebrauchsfertigen Klebstoff auf Gelatinebasis, der so modifiziert ist, dass er feinste Fäden zieht und so in der beschriebenen Weise mit besonderem Vorteil in der Papierindustrie einsetzbar ist. Besonders im Bereich der Herstellung von "Tissue and Towels"-Produkten ist der erfindungsgemäße Klebstoff geeignet, da er eine großflächige Verklebung bei sehr geringem Klebstoffverbrauch ermöglicht. Weiterhin entwickelt der Klebstoff seine sehr hohe Klebkraft sofort beim Übergang vom flüssigen in den Gelzustand, so dass beispielsweise ein Durchschlagen des Klebstoffes, wie es bei herkömmlichen Klebern in diesem Bereich zu beobachten ist, bei dem erfindungsgemäßen Klebstoff in der Regel nicht auftritt. Zusätzlich ist der erfindungsgemäße Klebstoff grundsätzlich ungiftig, so dass er besonders im Lebensmittelbereich, beispielsweise bei Küchenpapiertüchern, sehr vorteilhaft eingesetzt werden kann. Weiterhin ist der Klebstoff in Wasser bei Temperaturen beispielsweise oberhalb von 30 °C löslich, so dass beim Recyclen von Papier mit diesem Klebstoff keine Rückstände als sogenannte Stickies auftreten. Auch die Entsorgung von entsprechendem Papier oder anderen verklebten Substratlagen ist wegen der Ungiftigkeit des Klebstoffs und dessen Löslichkeit in Wasser unproblematisch.

## Patentansprüche

1. Klebstoff auf Gelatinebasis, der bei Normaltemperatur im wesentlichen fest ist, **dadurch gekennzeichnet, dass** er neben anderen Bestandteilen ein wasserlösliches Polymer umfasst, welches dem Klebstoff fadenziehende Eigenschaften verleiht.

2. Klebstoff nach Anspruch 1, **dadurch gekennzeichnet, dass** er etwa 0,1 bis etwa 20 Gew.-%, insbesondere etwa 5 bis etwa 15 Gew.-% des wasserlöslichen Polymers umfasst.

3. Klebstoff nach Anspruch 1 oder Anspruch 2, **dadurch gekennzeichnet, dass** der Klebstoff etwa 10 bis etwa 60 Gew.-%, insbesondere etwa 20 bis etwa 40 Gew.- % Gelatine umfasst.

4. Klebstoff nach einem der vorhergehenden Ansprüche, **dadurch gekennzeichnet, dass** der Klebstoff etwa 20 bis etwa 60 Gew.-%, insbesondere etwa 30 bis etwa 40 Gew.-% Wasser umfasst.

5. Klebstoff nach einem der vorhergehenden Ansprüche, **dadurch gekennzeichnet, dass** der Klebstoff etwa 0 bis etwa 40 Gew.-%, insbesondere etwa 5 bis etwa 20 Gew.-% Weichmacher, vorzugsweise Glycerin und/oder Diethylenglykol umfasst.

6. Klebstoff nach einem der vorhergehenden Ansprüche, **dadurch gekennzeichnet, dass** das wasserlösliche Polymer Polyethylenglykol, Polyvinylalkohol oder ein Gemisch von Polyethylenglykol und/oder Polyvinylalkohol ist, wobei vorzugsweise das Polyethylenglykol eine Molmasse von mindestens 1.000 g/mol, insbesondere mindestens 8000 g/mol, vorzugsweise mindestens 25.000 g/mol hat, und/oder der Polyvinylalkohol eine Molmasse von mindestens 1.000 g/mol, vorzugsweise mindestens 5.000 g/mol hat.

7. Klebstoff nach einem der vorhergehenden Ansprüche, **dadurch gekennzeichnet, dass** das wasserlösliche Polymer ein Gemisch von Polyethylenglykolen und/oder Polyvinylalkoholen verschiedener Molmassen ist.

8. Klebstoff nach einem der vorhergehenden Ansprüche, umfassend
- etwa 0,1 bis etwa 20 Gew.-%, insbesondere etwa 5 bis etwa 15 Gew.-% des wasserlöslichen Polymers,
- etwa 10 bis etwa 60 Gew.-%, insbesondere etwa 20 bis etwa 40 Gew.-% Gelatine,
- etwa 20 bis etwa 60 Gew.-%, insbesondere etwa 30 bis etwa 40 Gew.-% Wasser,
- etwa 0 bis etwa 40 Gew.-%, insbesondere etwa 5 bis etwa 20 Gew.-% Weichmacher, vorzugsweise Glycerin und/oder Diethylenglykol und
- gegebenenfalls weitere Bestandteile.

9. Klebstoff nach einem der vorhergehenden Ansprüche, umfassend
- etwa 0,1 bis etwa 20 Gew.-%, insbesondere etwa 5 bis etwa 15 Gew.-% des wasserlöslichen Polymers,
- etwa 10 bis etwa 60 Gew.-%, insbesondere etwa 20 bis etwa 40 Gew.-% Gelatine,
- etwa 20 bis etwa 60 Gew.-%, insbesondere etwa 30 bis etwa 40 Gew.-% Wasser,
- etwa 0 bis etwa 40 Gew.-%, insbesondere etwa 5 bis etwa 20 Gew.-% Weichmacher, vorzugsweise Glycerin und/oder Diethylenglykol,
- etwa 0 bis etwa 50 Gew.-%, insbesondere etwa 5 bis etwa 20 Gew.-% Zucker und/oder Zuckersirup, vorzugsweise Saccharose und/oder Glucose,
- etwa 0 bis 20 Gew.-%, insbesondere etwa 5 bis etwa 15 Gew.-% Salze, vorzugsweise Sulfate,
- etwa 0 bis etwa 1 Gew.-%, insbesondere etwa 0,01 bis etwa 0,5 Gew.- % Desinfektions- und/oder Bleichmittel, vorzugsweise Wasserstoffperoxid,
- etwa 0 bis etwa 5 Gew.-%, insbesondere etwa 0,1 bis etwa 3 Gew.-% Weißmacher, vorzugsweise Titandioxid,
- etwa 0 bis etwa 1 Gew.-%, insbesondere etwa 0,1 bis etwa 0,6 Gew.-% Konservierungsmittel,
- etwa 0 bis etwa 1 Gew.-%, insbesondere etwa 0,1 bis etwa 0,7 Gew.-% Entschäumer und
- etwa 0 bis etwa 1 %, insbesondere etwa 0,01 bis etwa 0,5 Gew.-% Parfümierungsmittel.

10. Klebstoff nach einem der vorhergehenden Ansprüche, **dadurch gekennzeichnet, dass** der Erstarrungspunkt des Klebstoffes unterhalb von 70 °C, insbesondere unterhalb von 50 °C, vorzugsweise unterhalb von 45 °C liegt.

11. Klebstoff nach einem der vorhergehenden Ansprüche, **dadurch gekennzeichnet, dass** er im Temperaturbereich zwischen etwa 30 bis etwa 80 °C, insbesondere zwischen etwa 50 bis etwa 70 °C schmelzbar ist.

12. Verwendung eines Klebstoffs gemäß einem der vorhergehenden Ansprüche für die Zwischenlagenverklebung von Lagen mit vliesartiger Struktur, insbesondere für die Zwischenlagenverklebung von Papieren, wobei vorzugsweise die Zwischenlagenverklebung für Bahnenware eingesetzt wird.

13. Produkt aus mindestens zwei Lagen mit vliesartiger Struktur, insbesondere Papierlagen, **dadurch gekennzeichnet, dass** die Lagen mit einem fadenförmigen Klebstoff auf Gelatinebasis, insbesondere einem Klebstoff gemäß einem der Ansprüche 1 bis 11, miteinander verklebt sind.

14. Verfahren zur Zwischenlagenverklebung, **dadurch gekennzeichnet, dass** ein Klebstoff gemäß einem der Ansprüche 1 bis 11 in Fadenform auf mindestens eine der zu verklebenden Lagen in im wesentlichen flüssiger Phase aufgetragen wird und die Lagen vor Verlust der Klebkraft des Klebstoffes zusammengeführt werden.

15. Verfahren nach Anspruch 14, **dadurch gekennzeichnet, dass** zur Ausbildung der Fäden der Klebstoff mit einer Temperatur oberhalb des Erstarrungspunktes des Klebstoffs durch Öffnungen, insbesondere Löcher und/oder Düsen, herausgepresst wird, wobei vorzugsweise die Temperatur im Bereich zwischen etwa 45 und etwa 80 °C, insbesondere zwischen etwa 50 und etwa 60 °C liegt.

16. Verfahren nach Anspruch 14 oder Anspruch 15, **dadurch gekennzeichnet, dass** zwischen den Öffnungen und der Lage, auf die der Klebstoff aufgetragen wird, ein Abstand von etwa 0,5 bis etwa 20 cm, insbesondere etwa 1 bis etwa 10 cm, eingehalten wird.

17. Verfahren nach einem der Ansprüche 14 bis 16, **dadurch gekennzeichnet, dass** die Fäden des in Fadenform aufgetragenen Klebstoffs zueinander einen Abstand von etwa 0,1 bis etwa 10 cm, insbesondere etwa 0,2 bis etwa 1 cm haben.

18. Verfahren nach einem der Ansprüche 14 bis 17, **dadurch gekennzeichnet, dass** die Lagen nach dem Zusammenführen zusätzlich fixiert, insbesondere durch Walzen zusammengepresst und/oder geprägt werden.

19. Auftragsvorrichtung zur Zwischenlagenverklebung mit einem fadenziehenden Klebstoff, insbesondere mit einem Klebstoff gemäß einem der Ansprüche 1 bis 11, umfassend mindestens eine Klebstoffschmelzeinrichtung, mindestens eine Klebstoffzuführeinrichtung, insbesondere eine beheizte Klebstoffzuführeinrichtung, und mindestens einen Auftragskopf mit mindestens zwei Austrittsöffnungen, insbesondere Löchern und/oder Düsen.

20. Auftragsvorrichtung nach Anspruch 19, **dadurch gekennzeichnet, dass** die Austrittsöffnungen einen Durchmesser zwischen etwa 0,05 und etwa 1 mm, insbesondere zwischen etwa 0,1 und etwa 0,5 mm aufweisen.

21. Auftragsvorrichtung nach Anspruch 19 oder Anspruch 20, **dadurch gekennzeichnet, dass** die Austrittsöffnungen zueinander einen Abstand von etwa 0,1 bis etwa 10 cm, insbesondere etwa 0,2 bis etwa 1 cm haben.

22. Auftragsvorrichtung nach einem der Ansprüche 19 bis 21, **dadurch gekennzeichnet, dass** die Auftragsvorrichtung für die Verklebung von Bahnenware vorgesehen ist, wobei der Auftragskopf vorzugsweise über der im wesentlichen ganze Bahnbreite angeordnet ist.

23. Auftragsvorrichtung nach einem der Ansprüche 19 bis 22, **dadurch gekennzeichnet, dass** die Klebstoffschmelzeinrichtung für ein Aufschmelzen bei Temperaturen zwischen etwa 30 und etwa 80 °C, insbesondere zwischen etwa 50 und etwa 80 °C vorgesehen ist.

24. Auftragsvorrichtung nach einem der Ansprüche 19 bis 23, **dadurch gekennzeichnet, dass** die Klebstoffschmelzeinrichtung eine Zwillingsfassschmelzanlage ist.
